(19) Europäisches Patentamt
European Patent Office
Office européen des brevets

(11) Veröffentlichungsnummer: **0 475 023 B1**

(12) # EUROPÄISCHE PATENTSCHRIFT

(45) Veröffentlichungstag der Patentschrift: **30.08.95**

(51) Int. Cl.$^6$: **C08G 59/24**, C08G 59/50, C08L 63/00, G02F 1/35

(21) Anmeldenummer: **91112085.5**

(22) Anmeldetag: **19.07.91**

(54) **Härtbare Mischungen zur Herstellung von Epoxidnetzwerken, Verfahren zu deren Herstellung und Verwendung.**

(30) Priorität: **01.08.90 DE 4024375**
**18.12.90 DE 4040471**

(43) Veröffentlichungstag der Anmeldung:
**18.03.92 Patentblatt 92/12**

(45) Bekanntmachung des Hinweises auf die Patenterteilung:
**30.08.95 Patentblatt 95/35**

(84) Benannte Vertragsstaaten:
**CH DE FR GB IT LI**

(56) Entgegenhaltungen:
**EP-A- 0 252 359**
**EP-A- 0 363 237**

**ANGEWANDTE MAKROMOLEKULARE CHEMIE. APPLIED MACROMOLECULAR CHEMISTRY AND PHYSICS, Band 185/186, Februar 1991, Seiten 33-42, Basel, CH; S. KIRCHMEYER et al.:"Geordnete Epoxidnetzwerke aus 4-Glycidylphenyl-4-Glycidyl-Benzoat und 3-BZW. 4-Aminophenyl-4-Aminobenzoat"**

(73) Patentinhaber: **BAYER AG**

**D-51368 Leverkusen (DE)**

(72) Erfinder: **Kirchmeyer, Stephan, Dr.**
**Heymannstrasse 36**
**W-5090 Leverkusen 1 (DE)**
Erfinder: **Müller, Hanns-Peter, Dr.**
**Weizenfeld 36**
**W-5060 Bergisch Gladbach 2 (DE)**
Erfinder: **Karbach, Alexander, Dr.**
**Scheiblerstrasse 81**
**W-4150 Krefeld (DE)**
Erfinder: **Franke, Joachim, Dr.**
**Grünen Bäumchen 19**
**W-5060 Bergisch Gladbach (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.09/3.3.3)

## Beschreibung

Die Erfindung betrifft härtbare Mischungen zur Herstellung von Epoxidnetzwerken mit hoher Schlagzähigkeit, diese Epoxidnetzwerke, ein Verfahren zu ihrer Herstellung und ihre Verwendung als polymere Werkstoffe, Beschichtungs- und Überzugsmittel, als Klebstoffe oder Elektroisolierstoffe, gegebenenfalls in Kombination mit mineralischen Füllstoffen oder in Kombination mit Glasfaser-, C-Fasern, Aramidfasern oder deren Gewebe, Gemische oder Vliese zur Herstellung von Hochleistungsverbundkunststoffen.

Während flüssigkristalline Eigenschaften in thermoplastischen Polymeren eine sogenannte Eigenverstärkung bewirken und bereits kommerziell verwertet werden, sind erst wenige Arbeiten über flüssigkristalline Eigenschaften in hochvernetzten Duroplasten bekannt geworden.

Die Härtung duroplastischer Materialien kann im flüssigkristallinen Zustand vorgenommen werden, wobei die flüssigkristallinen (LC) Eigenschaften der netzwerkbildenden Bausteine oder diejenigen eines erst während der Härtungsreaktion entstehenden LC-Intermediats benutzt werden können. Im gehärteten Festkörper werden dadurch Überstrukturen erzeugt.

DE 36 22 613 (EP252359) beschreibt beispielsweise ein Verfahren, nach dem auch Epoxidnetzwerke mit Überstrukturen unter Verwendung ausschließlich para substituierter aromatischer Diamine herstellbar sind. Dabei wird der Netzwerkaufbau innerhalb des LC-Temperaturbereichs von mindestens einem der zum Aufbau verwendeten Bausteine durchgeführt.

Im Gegensatz dazu können nach DE 40 07 056 Epoxidnetzwerke mit Überstrukturen auch erhalten werden, wenn keiner der Bausteine LC-Eigenschaften aufweist, jedoch während der Härtung ein LC-Intermediat entsteht.

Alle Arbeiten lassen gemeinsame Strukturmerkmale der netzwerkbildenden Bausteine erkennen, die bereits von den LC-Thermoplasten her bekannt sind. Sie besitzen eine starre, stäbchenförmige Geometrie ohne Knick. Charakteristisch sind para-disubstituierte aromatische Ringe, 4,4'-disubstituierte Biphenyle, 4,4'-disubstituierte Benzoesäurephenylester oder deren heterocyclische Analoga. Strukturen starrer, stäbchenförmiger Bausteine, die z.B. für LC-Polyamide und LC-Polyester besonders geeignet sind, werden z.B. in R.W. Lenz "Synthetic Routes to Liquid Crystalline Polymers" [R.W. Lenz in L.L. Chapoy "Recent Advances in Liquid Crystalline Polymers", Elsevier Applied Science Publishers LTD (1985) London, New York] beschrieben. Diese Bausteine sind auch besonders für die Erzeugung von Überstrukturen in duroplastischen Netzwerken geeignet.

Bausteine mit geknickter Struktur werden auch flüssigkristallinen Polymeren zugesetzt, um die Verarbeitbarkeit, insbesondere die Löslichkeit und für Thermoplasten wichtige Schmelzbarkeit zu verbessern. Dabei werden bewußt Einbußen in den mechanischen und flüssigkristallinen Eigenschaften in Kauf genommen.

Über die Verwendung geknickter Bausteine in duroplastischen Epoxid-Netzwerken mit Überstrukturen ist bislang nichts bekannt geworden. Viele technisch gebräuchliche Diaminhärter für Epoxidharze besitzen zwar relativ starre, aber geknickte Strukturen. Unter keinen Umständen waren bisher aus diesen technisch gebräuchlichen Diaminhärtern, auch in Kombination mit Epoxidmonomeren steifer, linearer Struktur, Epoxidnetzwerke mit Überstrukturen zu erhalten.

Insofern war es für den Fachmann völlig überraschend, daß gerade aus den erfindungsgemäß eingesetzten Diaminhärtern mit geknickter Struktur Epoxidnetzwerke mit Überstrukturen hergestellt werden können.

Weder aus theoretischen Überlegungen, noch aus chemischer Intuition heraus ist für den Fachmann ein Grund zu erkennen, weshalb die mechanischen Eigenschaften der erfindungsgemäßen Netzwerke diejenigen von bisher bekannten Netzwerken mit Überstrukturen mehr als marginal übertroffen werden sollten.

Überraschenderweise besitzen die erfindungsgemäßen Epoxidnetzwerke mit Überstrukturen eine unerwartet hohe Schlagzähigkeit, die das drei- bis vierfache gegenüber konventionellen Epoxidnetzwerken und mehr als das doppelte von bisher bekannten Netzwerken mit Überstruktur beträgt. Dieser Befund ist deswegen so überraschend und für den Fachmann unvorhersehbar, weil im Gegensatz zu Thermoplasten, bei denen die Monomereigenschaften eine große Bedeutung haben, in Netzwerken die Netzwerkeigenschaften grundlegend von der Netzwerktopologie festgelegt werden.

Weiterhin überrascht, daß die hohen Werte an Schlagzähigkeit nicht mit einem Absinken der Festigkeitswerte (Zug- und Biegefestigkeit) und der Wärmeformbeständigkeit einhergeht; diese liegen auf sehr hohem Niveau. Es liegt also kein sogenannter "Weichmachereffekt" vor, der relativ häufig beobachtet wird.

Schließlich lassen sich die erfindungsgemäßen härtbaren Mischungen überraschenderweise durch Wärmebehandlung in feste oder hochviskose Zwischenprodukte, sogenannte B-Zustände, überführen, die im Gegensatz zu technisch üblichen härtbaren Gemischen auf Epoxid-Basis bei Raumtemperatur nicht weiterreagieren.

Gegenstand der Erfindung sind demnach härtbare Mischungen, geeignet zur Herstellung von Epoxidnetzwerken, gegebenenfalls mit Überstruktur und hoher Schlagzähigkeit bestehend aus

a) einer Epoxidgruppen enthaltenden Komponente gemäß Formel (I)

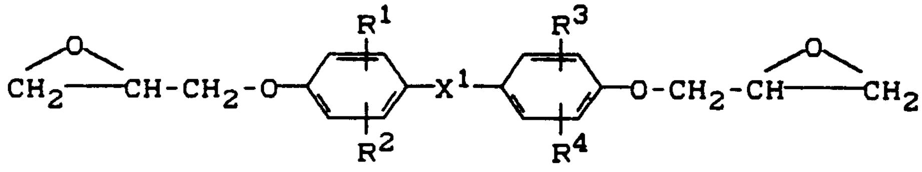

(I)

wobei

$R^1$,$R^2$,$R^3$,$R^4$ unabhängig voneinander Wasserstoff, geradkettiges oder verzweigtes $C_1$ bis $C_{12}$-Alkyl, bei dem die C-Atome 1 bis 3 mal durch Ethersauerstoff unterbrochen sein können, Fluor, Chlor, Brom, Cyano oder Trifluormethyl bedeuten und

$X^1$ für $-CH_2-CH_2-$, $-CH(CH_3)-CH_2-$, $-CH(CH_3)-CH(CH_3)-$,

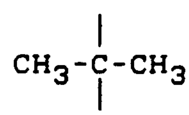

$-CO-O-$, $-O-CO-$, $-CH=CH-$, $-CH=C(CH_3)-$, $-N=N-$, $-CH=N-$, $-O-CH_2-$, $-CH_2-O-$, $-CH_2S-$, $-N=CH-$, $-CO-S-$ oder $-S-CO-$ oder aber für eine direkte Bindung zwischen den aromatischen Kernen steht,

b) einer gegen Epoxidgruppen reaktiven Komponente gemäß Formel (II) und

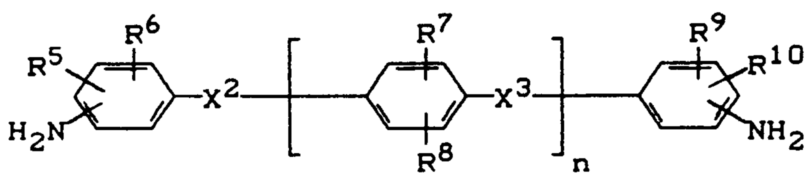

(II)

wobei

$R^5$ bis $R^{10}$ unabhängig voneinander und unabhängig von $R^1$ bis $R^4$ den Bedeutungsumfang von $R^1$ bis $R^4$ besitzen,

$X^2$, $X^3$ unabhängig von $X^1$ und unabhängig voneinander den Bedeutungsumfang von $X^1$ besitzen,

n 0 oder 1 bedeutet und

die beiden Aminogruppen meta- oder paraständig angeordnet sind, wobei mindestens eine der beiden Aminogruppen metaständig zur Gruppe $X^2$ oder $X^3$ angeordnet sein muß und

c) gegebenenfalls weiteren Zusatzstoffen.

Gegenstand der Erfindung ist weiterhin ein Verfahren zur Herstellung von Epoxidnetzwerken, gegebenenfalls mit Überstruktur und hoher Schlagzähigkeit, dadurch gekennzeichnet, daß man eine härtbare Mischung gemäß Anspruch 1, bestehend aus

a) einer Epoxidgruppen enthaltenden Komponente gemäß Formel (I)

b) einer gegen Epoxidgruppen reaktiven Komponente gemäß Formel (II) und

c) gegebenenfalls weiteren Zusatzstoffen,

im Temperaturbereich von 60 bis 250 °C, bevorzugt 80 bis 160 °C umsetzt, gegebenenfalls die Aushärtung unterbricht durch Abkühlung unter 60 °C und durch Wiedererwärmung auf eine Temperatur von 60 bis

250 °C zu einem späteren Zeitpunkt, wobei dazwischen eine Formgebung oder Formveränderung liegen kann, die Aushärtung fortsetzt.

Gegenstand der Erfindung ist schließlich die Verwendung der polymeren Epoxidnetzwerke, gegebenenfalls mit Überstruktur und hoher Schlagzähigkeit nach Anspruch 3 als polymere Werkstoffe oder als Beschichtungs- und Überzugsmittel sowie die Verwendung der härtbaren Mischungen gemäß Anspruch 1 in Kombination mit Glasfasern, C-Fasern oder Aramidfasern zur Herstellung von Hochleistungsverbundwerkstoffen.

Die Komponente a) kann in Form einer einzigen Verbindung im Rahmen der Formel (I) oder in Form eines Gemisches mehrerer Verbindungen im Rahmen der Formel (I) umgesetzt werden.

Bei alleiniger Verwendung der Verbindung der Formel (Ia)

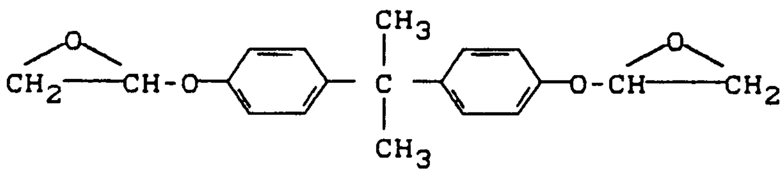 (Ia),

als Komponente a) werden Netzwerke ohne Überstruktur erhalten.

In bevorzugter Weise wird als Komponente a) mindestens eine der folgenden Verbindungen eingesetzt: 4-Epoxy propoxyphenyl-4-epoxypropoxybenzoat, 4,4'-Bis-(epoxypropoxy)-$\alpha$-methylstilben, 4,4'-Bis-(epoxypropoxy)biphenyl und 4,4'-Bis-(epoxypropoxy)biphenyl.

Erfindungsgemäß kann die Komponente a), die in Form von mindestens einer Verbindung im Rahmen der obigen Formel (I) umgesetzt wird, mit anderen Epoxidgruppen enthaltenden Verbindungen abgemischt werden.

Zur Abmischung mit der Komponente a) sind aliphatische, cycloaliphatische, aromatische oder heterocyclische Verbindungen mit Epoxidgruppen, die an sich bekannt und technisch gebräuchlich sind, geeignet. Solche Verbindungen können eine, zwei oder mehr Epoxidgruppen pro Molekül enthalten. Die den Epoxidgruppen enthaltenden Verbindungen zur Abmischung mit der Komponente a) zugrundeliegenden aliphatischen Verbindungen haben 1 bis 20 C-Atome und stellen epoxidierbare Carbonsäuren, Carbonsäureanhydride, Alkohole, Dialkohole, Polyalkohole oder ungesättigte Verbindungen dar. Die epoxidierbaren cycloaliphatischen Verbindungen stellen Ringe mit 3 bis 7 C-Atomen, bevorzugt mit 5 oder 6 C-Atomen dar, welche ihrerseits bis zu 3 Methyl- oder Ethylgruppen tragen können und außerdem solche funktionelle Gruppen tragen, daß sie zu den obengenannten Verbindungsklassen zählen.

Als aromatische Verbindungen seien Phenole, Polyphenole, Carbonsäuren, Polycarbonsäuren, Oxycarbonsäuren, aromatische Amine oder aromatische Polyamine genannt, deren Grundgerüst ein Benzol- oder Naphthalinkern ist. Ferner gehören zu solchen aromatischen Verbindungen solche, deren Grundgerüst aus zwei Benzolkernen zusammengesetzt ist, die durch eine Einfachbindung, durch eine $C_1$-$C_6$-Alkylengruppe, durch eine $C_2$-$C_6$-Alkylidengruppe, durch eine $C_5$-$C_6$-Cycloalkylengruppe, durch eine $C_5$-$C_6$-Cycloalkylidengruppe, durch Sauerstoff, Schwefel, -$SO_2$- oder -CO- verknüpft sind.

Als Grundgerüst für epoxidierbare heterocyclische Verbindungen seien aromatische oder nicht-aromatische 5- oder 6-Ringe mit einem oder zwei Stickstoff-, Sauerstoff- oder Schwefelatomen genannt, die Hydroxyl-, Carboxyl-oder Aminogruppen zur Epoxidierung tragen.

Beispiele für solche zur Abmischung mit der Komponente a) geeignete Verbindungen sind:
Polyglycidylether mehrwertiger Phenole, beispielsweise von Brenzkatechin, Resorcin, Hydrochinon, 4,4'-Dihydroxydiphenyl-dimethylmethan, 4,4'-Dihydroxydiphenylcyclohexan, 4,4'-Dihydroxy-3,3'dimethyl-diphenylpropan, 4,4'-Dihydroxydiphenyl-sulfon, Tris-(4-hydroxyphenyl)-methan, von Chlorierungs- und Bromierungsprodukten der vorstehend genannten Polyphenole, von Novolaken (Umsetzungsprodukte von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit 1 Mol eines Dihalogenalkans oder Dihalogendialkylethers erhalten wurden (GB 1.017.612), von Polyphenolen, die durch Kondensation von Phenolen und langkettigen, mindestens zwei Halogenatome enthaltenden Halogenparaffinen erhalten werden (GB 1.024.288);
Phenyl-Epoxid-Verbindungen auf der Basis von aromatischen Aminen und Epichlorhydrin, beispielsweise N-Di(2,3-epoxy-propyl)-anilin, N,N'-Dimethyl-N,N'-diepoxypropyl-4,4'-diamino-diphenylmethan, N-Di-epoxypropyl-4-aminophenyl-glycidylether (GB 772.830 und GB 816.923); Glycidylester mehrwertiger aromatischer, aliphatischer und cycloaliphatischer Carbonsäuren, wie Phthalsäure-diglycidylester, Adipinsäure-diglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen (n = 2-6) oder Hexahydrophthalsäureglycidylester, die gegebenenfalls mit Methylgruppen substituiert sein können; Glycidylether mehrwertiger Alkohole, beispielsweise von 1,4-Butandiol, Glycerin, Trimethylolpropan, Pentaerythrit und von Polyethylenglykolen;
weitere Glycidylverbindungen, wie Triglycidyl-isocyanurat, N,N-Di-epoxypropyl-oxamid, Polyglycidylthioether aus mehrwertigen Thiolen, wie Bis-Mercaptomethyl-benzol, Diglycidyl-trimethylen-trisulfon, Polyglycidylether auf Basis von Hydantoinen;
Epoxidierungsprodukte von ungesättigten oder mehrfach ungesättigten (cyclo)aliphatischen Verbindungen, wie vegetabilischen Ölen und deren Umwandlungsprodukten, Epoxidierungsprodukte von Di- und Polyolefinen, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, beispielsweise auf Basis von Butadien, Polyisopren, Butadien-Styrol-Mischpolymerisaten, Divinylbenzoldicyclopentadien, ungesättigten Polyestern, ferner Epoxidierungsprodukte aus Olefinen, welche durch Diels-Alder-Addition zugänglich sind und anschließend durch Epoxidierung mit Perverbindungen in Polyepoxide übergeführt werden oder aus Verbindungen, die zwei Cyclopenten- oder Cyclohexenringe über Brückenatome oder Brückenatomgruppen der obengenannten Art verknüpft enthalten; weiterhin seien Polymerisate von ungesättigten Monoepoxiden genannt, beispielsweise von Methacrylsäure-glycidylestern oder Allyl-glycidylethern.

In bevorzugter Weise werden zur Abmischung mit der Komponente a) eine oder mehrere Verbindungen der folgenden Gruppe eingesetzt: Polyglycidylether mehrwertiger Phenole, insbesondere von Bisphenol A; Polyepoxidverbindungen auf der Basis von aromatischen Aminen, insbesondere Bis(N-epoxypropyl)-anilin, N,N'-Dimethyl-N,N'-diepoxypropyl-4,4'-diaminodiphenylmethan und N-Diepoxypropyl-4-amino-phenylglycidylether; Polyglycidylester aus cycloaliphatischen Dicarbonsäuren, insbesondere Hexahydrophthalsäurediglycidylester; Polyepoxide aus dem Umsetzungsprodukt von n Molen Hexahydrophthalsäureanhydrid und 1 Mol eines Polyols mit n Hydroxylgruppen (n bedeutet eine ganze Zahl von 2 bis 6), insbesondere von 3 Mol Hexahydrophthalsäureanhydrid und 1 Mol 1,1,1-Trimethylolpropan; 3,4-Epoxy-cyclohexylmethyl-3,4-epoxycyclohexancarboxylat.

Mit besonderem Vorteil können flüssige Polyepoxide, wie Bis(N-epoxypropyl)-anilin oder Vinyl-cyclohexen-diepoxid verwendet werden. Dies kann in manchen Fällen die Viskosität von bereits flüssigen Polyepoxiden weiter herabsetzen oder feste Polyepoxide in flüssige Mischungen überführen.

In Abmischungen der Komponente a) mit den genannten zur Abmischung geeigneten Epoxidverbindungen stellt die Komponente a) 50-100 Mol-%, bevorzugt 70-100 Mol-%, besonders bevorzugt 85-100 Mol-%, ganz besonders bevorzugt 95-100 Mol-% der gesamten Abmischung dar. Diese Nomenklatur umfaßt demnach auch die Umsetzung der Komponente a) ohne Abmischungsbestandteile.

Die Komponente b) umfaßt Verbindungen im Rahmen der Formel (II), die in Form einer einzigen Verbindung oder in Form eines Gemisches mehrerer Verbindungen im Rahmen der Formel (II) umgesetzt werden.

In bevorzugter Weise wird als Komponente b) mindestens eine Verbindung der Formel (III)

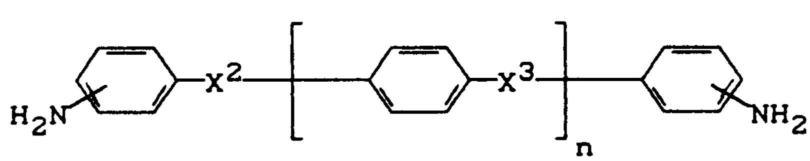

(III),

in welcher

$X^2$, $X^3$ den obigen Bedeutungsumfang hat und

n für 0 oder 1 steht,

die beiden Aminogruppen meta- oder paraständig angeordnet sind, wobei mindestens eine der beiden Aminogruppen metaständig zur Gruppe $X^2$ oder $X^3$ angeordnet sein muß.

In besonders bevorzugter Weise wird als Komponente b) mindestens eine Verbindung der Formel (IV), (V) oder (VI)

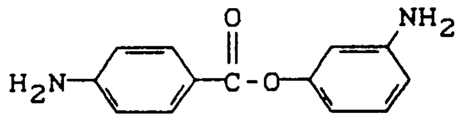

(IV),

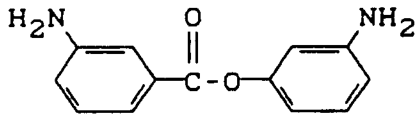

(V),

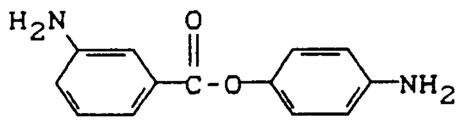

(VI),

umgesetzt.

Komponente b) kann mit einer oder mehreren funktionellen, mit Epoxidgruppen reagierenden Verbindungen gemäß Formel (VII)

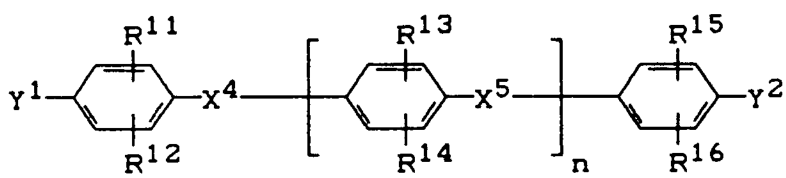

(VII)

wobei

| | |
|---|---|
| $R^{11}$ bis $R^{16}$ | unabhängig voneinander und unahängig von $R^1$ bis $R^4$ den Bedeutungsumfang von $R^1$ bis $R^4$ annimmt, |
| $X^4$, $R^5$ | unabhängig voneinander und unabhängig von $X^1$ den Bedeutungsumfang von $X^1$ annimmt, |
| n | 0 oder 1 bedeuten und |
| $Y^1$, $Y^2$ | unabhängig voneinander OH, $NH_2$ oder NH-$C_1$ bis $C_4$-Alkyl annimmt, |

abgemischt werden.

In bevorzugter Weise wird die Komponente b) mit mindestens einer Verbindung der Formel

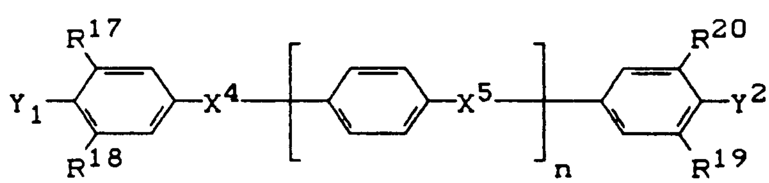

(VIII),

wobei

| | |
|---|---|
| $R^{17}$ bis $R^{20}$ | unabhängig voneinander und unabhängig von $R^1$ bis $R^4$ den Bedeutungsumfang von $R^1$ bis $R^4$ annimmt, |
| $X^4$,$X^5$,$Y^1$,$Y^2$ | den obigen Bedeutungsumfang und |
| n | 0 oder 1 bedeuten, |

abgemischt.

In besonders bevorzugter Weise wird Komponente b) mit mindestens einer Verbindung aus der Gruppe

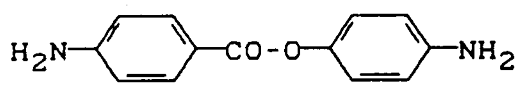

(IX),

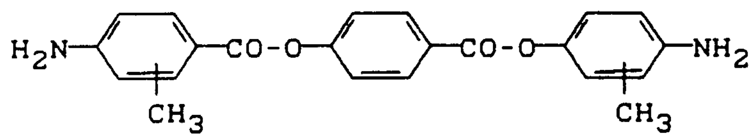

(X),

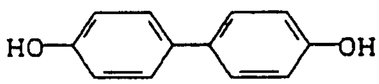

(XI),

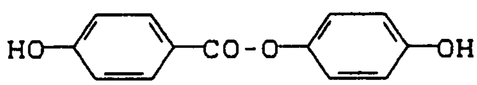

(XII),

abgemischt.

Diese Verbindungen sind in DE 40 07 056 beschrieben. In Abmischungen der Komponente b) mit Verbindungen gemäß allgemeiner Formel (VII) stellt die Komponente b) 50 bis 100 Mol-%, bevorzugt 80 bis 100 Mol-%, besonders bevorzugt 95 bis 100 Mol-% der gesamten Abmischung dar, Diese Nomenklatur umfaßt demnach auch die Umsetzung der Komponente b) ohne Abmischungsbestandteile.

In ähnlicher Form, wie dies weiter oben für die Komponente a) beschrieben wurde, kann auch die Komponente b) oder die Abmischung der Komponente b) mit einer oder mehreren Verbindungen gemäß Formel (VII) mit einem polyfunktionellen Amin, polyfunktionellen Phenol oder einem Epoxid-Härter oder einem Gemisch mehrerer von ihnen, wie sie an sich bekannt und technisch gebräuchlich sind, abgemischt werden. Solche zur Abmischung mit der Komponente b) oder einem Gemisch der Komponente b) mit einer oder mehreren Verbindungen gemäß Formel (VII) geeignete Verbindungen sind dem Fachmann beispielsweise bekannt aus "Polymere Werkstoffe", herausgegeben von H. Batzer, Band III, Technologie 2, Georg Thieme Verlag, Stuttgart 1984, Seite 170 ff. und "Methoden der organischen Chemie" (Houben-Weyl), Band E 20 (Makromolekulare Stoffe), Georg Thieme Verlag, Stuttgart, New York 1987, Seite 1965 ff. und Seite 1976 ff.

Beispiele hierfür sind polyfunktionelle Amine, wie Diethylentriamin, m-Phenylen-diamin, 4,4'-Diaminodiphenylsulfon und 4,4'-Diamino-diphenylmethan. Technisch gebräuchliche Epoxidharz-Härter, die zur Abmischung mit der Komponente b) in Frage kommen, sind tertiäre Amine, wie Benzyl-dimethylamin, 2-(Dimethylaminomethyl)-phenol, 2,4,6-Tris(dimethylaminomethyl)-phenol oder Triethanolamin, Alkoholate oder Imidazole, wie N-n-Butylimidazol.

In einer Abmischung der Komponente b) oder einem Gemisch der Komponente b) mit einer oder mehreren Verbindungen gemäß Formel (VII) mit einem polyfunktionellen Amin, polyfunktionellen Phenol oder einem Epoxid-Härter oder einem Gemisch mehrerer von ihnen stellt die Komponente b) oder die Mischung aus Komponente b) und einer oder mehrerer Verbindungen gemäß Formel (VII) 50 - 100 Mol-%, bevorzugt 70 - 100 Mol-%, besonders bevorzugt 85 - 100 Mol-%, ganz besonders bevorzugt 95 - 100 Mol-% der gesamten Abmischung dar.

Im Verlauf der Härtungsreaktion entstehen aus den erfindungsgemäßen härtbaren Mischungen in an sich bekannter Weise flüssigkristalline Zwischenprodukte, die zur Ausbildung von Überstrukturen, d.h. zur Ausbildung von mehrphasigen Netzwerken im ausgehärteten Epoxid-Festkörper führen.

Das Auftreten dieser Strukturen ist an der opaken Veränderung des Gemisches der Komponenten a) und b) bzw. deren oben beschriebenen Abmischungen zu erkennen. Solche flüssigkristallinen Strukturen werden in an sich bekannten Temperaturbereichen von 60 bis 180 °C, bevorzugt 80 bis 160 °C, besonders bevorzugt 120 bis 160 °C erreicht. Der günstigste Bereich für eine solche opake Veränderung ist selbstverständlich abhängig von der gewünschten Zusammensetzung des Reaktionsgemisches aus den Komponenten a) und b) bzw. deren Abmischungen und kann durch einfache Vorversuche festgestellt werden. Nach Übergang in den Epoxid-Festkörper läßt sich die Mehrphasigkeit durch Temperaturbehandlung nicht mehr verändern. Diese Vergehensweise ist prinzipiell bekannt und nicht Gegenstand der Erfindung. Überraschenderweise erhält man bei Verwendung der erfindungsgemäßen härtbaren Mischungen mehrphasige, opake Epoxid-Formkörper, die sich durch eine vielfach höhere Schlagzähigkeit auszeichnen.

Der Härtungsvorgang kann zu jedem beliebigen Zeitpunkt, insbesondere nach der Ausbildung des flüssigkristallinen Zustandes des intermediären Zwischenprodukts C, durch Abkühlung auf eine Temperatur unterhalb von 60 °C unterbrochen und zu einem späteren Zeitpunkt fortgesetzt werden. Zweckmäßig wird der Zeitpunkt der Unterbrechung der Umsetzung so gewählt, daß die beim Abkühlen erhaltene Mischung zwar im festen Zustand vorliegt, jedoch bei späterem Aufheizen auf die Temperatur der endgültigen Aushärtung im oben genannten Bereich wieder flüssig wird bzw. unter Druck verformbar wird. Die Anwendung dieses Verfahrens mit unterbrochener Härtung ist dann besonders vorteilhaft, wenn als Anwendungsgebiete Schichtpreßstoffe, faserverstärkte Prepregs, Preßmassen und Beschichtungsmassen, beispielsweise nach dem Wirbelsinterverfahren, in Betracht kommen. In jedem Falle ist dieses Verfahren vorteilhaft, wenn die Herstellung der durch unterbrochene Härtung erhaltenen Vorprodukte und deren endgültige Anwendung an verschiedenen Orten durchgeführt werden und erst der Anwender die endgültige Formgebung oder Formveränderung durchführt.

Zur Herstellung der erfindungsgemäßen polymeren Epoxidnetzwerke mit Überstruktur werden die Komponenten a) und b) (bzw. deren Abmischungen) in einem Mischungsverhältnis zusammengegeben, bei dem auf eine Epoxidgruppe etwa eine Phenolgruppe oder eine sekundäre Amingruppe oder auf zwei Epoxidgruppen eine primäre Amingruppe entfällt. Dieses Mischungsverhältnis kann wie bei herkömmlichen Epoxidharzen um bis zu 40 Äquivalent-% der genannten reaktiven Gruppen, bevorzugt um bis zu 20 Äquivalent-% bei der Komponente a) bzw. b) (bzw. deren Abmischungen) verändert werden.

Zur Herstellung der erfindungsgemäßen polymeren Epoxidnetzwerke mit Überstruktur können weiterhin Füllstoffe, wie Quarzmehl, Kreide, Aluminiumoxid, anorganische Pigmente wie Titandioxid, Eisenoxid, organische Pigmente, wie Phthalocyaninpigmente, Flexibilisatoren, wie Polyglykole, Polyetherglykole, Polyester mit endständigen Hydroxyl- und/oder Carboxylgruppen, Polysulfide, lösliche Farbstoffe, Verstärkungsmaterialien, wie Glasfasern, Gewebe oder Weichmacher in Mengen zugefügt werden, wie sie aus der Chemie der Epoxidharze bekannt sind. Es können auch mehrere dieser Zusatzstoffe eingesetzt werden.

Bei alleiniger Verwendung von Epoxiden die sich vom Bisphenol-A ableiten, z.B. bei alleiniger Verwendung des 4,4'-Bisglycidylphenyl-2,2-propans der (Formel Ia) als Komponente a) zeigen die herstellbaren Netzwerke keine Überstruktur.

Die erfindungsgemäßen polymeren Epoxidnetzwerke mit Überstruktur zeichnen sich im Vergleich mit solchen ohne Überstruktur bei gleichen thermischen Eigenschaften durch erhöhte Festigkeits- und Zähigkeitseigenschaften aus. Sie sind, soweit dies nicht oben bereits beschrieben wurde, als Gießharzformstoffe, beispielsweise als Konstruktions- und Isolierstoffe für Isolatoren, Transformatoren, Kondensatoren, gedruckten Schaltungen, Chipumhüllungsmaterialien sowie als Schichtpreßstoffe, für Rohre und Behälter für aggressive Flüssigkeiten, für Sportgeräte, beispielsweise für den Bootsbau, und für viele andere Bereiche verwendbar.

Der Gegenstand der Erfindung soll anhand der folgenden Beispiele noch näher erläutert werden.

<u>Beispiel 1</u> 3-Aminophenyl-4-aminobenzoat (IV)

Zu 229,35 g (1,65 Mol) 3-Nitrophenol in 100 ml wasserfreiem Dimethylformamid und 143,75 g (1,82 Mol) Pyridin wurden 306,19 g (1,65 Mol) 4-Nitrobenzoylchlorid bei Raumtemperatur portionsweise unter einer Stickstoffatmosphäre eingetragen und 4 Stunden bei 60 °C gerührt. Die Reaktionsmischung wurde auf 5 l Eiswasser gegossen, abgesaugt, der Rückstand bei 60 °C/20 mbar getrocknet und aus Essigsäureethylester umkristallisiert. Man erhielt 336,6 g (71 % der theoretischen Ausbeute) 3-Nitrophenyl-4-nitrobenzoat.

300 g (1,04 Mol) dieser Verbindung wurden in 2400 ml Dimethylformamid gelöst, 30 g Raney-Nickel zugesetzt und die Reaktionslösung bei 60 °C und 70 bar Wasserstoffdruck erschöpfend hydriert. Das Produkt wurde in 10 l Wasser ausgefällt, scharf abgesaugt, mit Wasser gewaschen und bei 40 °C/20 mbar 16 Stunden getrocknet. Man erhielt 175,75 g (74 % der theoretischen Ausbeute) 3-Aminophenyl-4-aminobenzoat mit einem Schmelzpunkt von 179 bis 182 °C.

<u>Beispiel 2</u> 3-Aminophenyl-3-aminobenzoat (V)

Analog zu Beispiel 1 wurden 695,0 g (5,0 Mol) 3-Nitrophenol, 927,5 g (5,0 Mol) und 437,5 g (5,5 Mol) Pyridin in 3000 ml Dimethylformamid zu 1236 g (86 % der theoretischen Ausbeute) 3-Nitrophenyl-3-aminobenzoat umgesetzt.

300 g (1,04 Mol) dieser Verbindung wurden in 1500 ml Dimethylformamid und unter Zusatz von 30 g Raney-Nickel in Analogie zu Beispiel 1 hydriert und aufgearbeitet. Man erhielt 180,5 g (76 % der theoretischen Ausbeute) 3-Aminophenyl-3-aminobenzoat mit einem Schmelzpunkt von 102 °C.

Beispiel 3 Umsetzung einer erfindungsgemäßen härtbaren Mischung und Erzeugung eines flüssigkristallinen Intermediats

15 g 4-Glycidylphenyl-4-glycidylbenzoat und 5 g 3-Aminophenyl-4-aminobenzoat (IV) werden innig vermischt. Man erhält ein Pulver. Jeweils 5 g dieses Pulvers werden in verschiedene Reagenzgläser gegeben und in ein 120 °C heißes Ölbad getaucht. Die Reagenzgläser werden nach 7 (Probe 1), 10 (Probe 2), 20 (Probe 3) und 30 (Probe 4) Minuten aus dem Ölbad entfernt. Vor Abkühlung ist der Inhalt sämtlicher Gläser, flüssig, transparent und homogen, Probe 4 ist etwas viskoser als die restlichen Proben. Probe 1 erstarrt schlagartig bei Abkühlung. Beobachtet man die Abkühlung eines noch heißen Tropfens unter dem Polarisationsmikroskop, beobachtet man Kristallwachstum. Probe 2 wird beim Abkühlen opak, verfestigt sich jedoch nicht, sondern bleibt viskos und klebrig. Ein Tropfen dieser Probe zeigt unter dem Polarisationsmikroskop beim Aufheizen bis 40 °C flüssigkristalline Eigenschaften. Probe 3 wird beim Abkühlen hart, opak und glasartig. Ein Tropfen dieser Probe zeigt unter dem Polarisationsmikroskop beim Aufheizen bis 100 °C flüssigkristalline Eigenschaften. Probe 4 wird beim Abkühlen hart, opak und glasartig wie Probe 3, jedoch ist sie bis 130 °C flüssigkristallin. Probe 4 wird in das 120 °C heiße Ölbad zurückgegeben und ist nach weiteren 20 Minuten vernetzt und besitzt ein opakes Erscheinungsbild.

Der Versuch zeigt, daß bei der Härtung der erfindungsgemäßen Mischungen tatsächlich im Laufe der Polyadditionsreaktion ein flüssigkristallines Intermediat gebildet wird. Das LC-Intermediat ist erkennbar am opaken Erscheinungsbild der Probe. Ein LC-Intermediat läßt sich in einen opaken Festkörper überführen.

Beispiel 4 Erzeugung eines Epoxidnetzwerkes mit Überstrukturen aus den erfindungsgemäßen härtbaren Massen

Jeweils 3,42 g 4-Glycidylphenyl-4-glycidylbenzoat und 1,14 g 3-Aminophenyl-4-aminobenzoat werden vermischt und bei 120 °C geschmolzen. Nach 10 Minuten wird die klare, homogene Schmelze durch Anlegen von Vakuum entgast und in kleine Gießformen gegossen. Diese Formen werden bei 80 °C (Probe 1), 120 °C (Probe 2), 160 °C (Probe 3) und 180 °C (Probe 4) jeweils 4 Stunden gehärtet. Aus den Proben 1 bis 3 resultieren jeweils opake Formkörper, aus Probe 4 resultiert ein transparenter Formkörper. Alle Formkörper sind nicht schmelzbar und unlöslich. Das Beispiel zeigt, daß ein bevorzugter Temperaturbereich von 80 bis 160 °C jeweils Netzwerke mit Ordnungsstrukturen entstehen. Diese sind erkennbar an ihrem opaken Erscheinungsbild.

Beispiel 5 Erzeugung eines Epoxidnetzwerkes mit Ordnungsstrukturen aus den erfindungsgemäßen härtbaren Mischungen

Jeweils 3,42 g 4-Glycidylphenyl-4-glycidylbenzoat und 3-Aminophenyl-3-aminobenzoat werden vermischt und bei 120 °C geschmolzen. Nach 10 Minuten wird die klare, homogene Schmelze durch Anlegen von Vakuum kurz entgast und in kleine Gießformen gegossen. Diese Formen werden bei 80 °C (Probe 1), 120 °C (Probe 2) und 160 °C (Probe 3) jeweils 4 Stunden gehärtet. Die Formkörper aus Probe 1 und 2 besitzen ein opakes Erscheinungsbild, der Formkörper aus Probe 3 ist transparent. Alle Formkörper sind nicht schmelzbar und unlöslich. Das Beispiel zeigt, daß der günstigste Temperaturbereich für eine Härtung von der gewünschten Zusammensetzung der Komponenten a) und b) abhängt und durch einfache Vorversuche festgestellt werden kann.

Beispiel 6 Erzeugung eines Epoxidnetzwerks mit Ordnungsstrukturen und hoher Schlagzähigkeit

240 g 4-Glycidylphenyl-4-glycidylbenzoat und 80 g 3-Aminophenyl-4-aminobenzoat werden 15 Minuten auf 120 °C erhitzt, entgast und in eine auf 120 °C vorgeheizte, 4 mm starke Plattenform gegossen. Man härtet die Platte 4 Stunden bei 120 °C und tempert 16 Stunden bei 160 °C nach. Man erhält eine opake Gießplatte, deren mechanische Eigenschaften ermittelt werden.

Vergleichsbeispiel I (nicht erfindungsgemäß)

Erzeugung eines Epoxidnetzwerks mit Ordnungsstrukturen, ohne Verwendung der erfindungsgemäßen härtbaren Massen.

240 g 4-Glycidylphenyl-4-glycidylbenzoat und 80 g 4-Aminophenyl-4-aminobenzoat werden wie in Beispiel 6 zu einer Gießplatte verarbeitet, jedoch härtet man 4 Stunden bei 80 ° C und tempert 16 Stunden bei 160 ° C nach. Man erhält eine opake Gießplatte, deren mechanische Eigenschaften ermittelt werden.

Vergleichsbeispiel II (nicht erfindungsgemäß)

Erzeugung eines Epoxidnetzwerks unter Verwendung eines Epoxidmonomers gemäß Formel (I) ohne Verwendung der erfindungsgemäßen härtbaren Massen.

240 g 4-Glycidylphenyl-4-glycidylbenzoat und 87 g 4,4'-Diaminodiphenylsulfon werden wie in Beispiel 6 zu einer Gießplatte verarbeitet, die 4 Stunden bei 120 ° C gehärtet und 16 Stunden bei 160 ° C getempert wird. Man erhält eine transparente Gießplatte, deren mechanische Eigenschaften ermittelt werden.

Tabelle 1

| Eigenschaften der Epoxidharzformkörper aus Versuch 6, I und II | | | | |
|---|---|---|---|---|
| Versuch Nr. | Biegefestigkeit (MPa) | Randfaserdehnung (%) | Martensgrad ( ° C) | Schlagzähigkeit (kJ/mm$^2$) |
| 6 | 130 | 8,3 | 171 | 90,5 |
| I* | 112 | 6,7 | 174 | 43,0 |
| II* | 121 | 7,5 | 180 | 35,2 |

* nicht erfindungsgemäß

Beispiele 6, I und II machen deutlich, daß nur bei Verwendung der erfindungsgemäßen härtbaren Massen Epoxidnetzwerke mit Überstrukturen und hoher Schlagzähigkeit erhalten werden.

Weder die Verwendung der einzelnen Komponenten der härtbaren Mischungen kombiniert mit technisch üblichen Epoxidmonomeren oder Härtern, noch die Erzeugung von Epoxidnetzwerken mit Überstrukturen, die ohne die Komponenten der erfindungsgemäßen härtbaren Mischungen hergestellt wurden sind eine ausreichende Bedingung für ein Epoxidnetzwerk mit Überstruktur und hoher Schlagzähigkeit.

Beispiel 7 (Netzwerk ohne Überstruktur)

252 g Epoxidharz (Bisphenol-A Bisglycidylether mit einem Epoxidäquivalentgewicht von 180) und 80 g 3-Aminophenyl-4-aminobenzoat (Formel III) wurden 15 min bei 120 ° C gerührt. Diese wird mittels Vakuum entgast, in eine Form vergossen und 4 h bei 120 ° C und 16 h bei 160 ° C gehärtet. Man erhält einen transparenten Formkörper ohne jegliche Überstruktur. Die mechanischen Daten des aus Beispiel 7 erhaltenen Formkörpers in Tab.2 zeigen, daß aus den erfindungsgemäßen härtbare Mischungen gehärtete Epoxidharze mit gleichzeitig hoher Schlagzähigkeit, Steifigkeit und Wärmeformbeständigkeit resultieren.

Vergleichbeispiel III

360 g Epoxidharz (s.Beispiel 7) und 114 g 4-Aminophenyl-4-aminobenzoat werden wie in Beispiel 7 verarbeitet und gehärtet. Die mechanischen Daten des aus Vergleichbeispiel III erhaltenen Formkörpers in Tab. 2 zeigen, daß durch die Verwendung steifer, linerarer Diaminhärter gehärtete Epoxidnetzwerke ohne besondere Schlagzähigkeit erhalten werden.

Vergleichbeispiel IV

313,7 Epoxidharz (s.Beispiel 7) und 86,3 g Methylendianilin werden wie in Beispiel 7 verarbeitet und gehärtet. Die mechanischen Daten des aus Vergleichbeispiel IV zu Beispiel 7 erhaltenen Formkörpers in Tab. 2 zeigen, daß durch die Verwendung technisch üblicher, geknickter Diaminhärter gehärtete Epoxidnetzwerke ohne besondere Schlagzähigkeit erhalten werden.

| Tabelle 2 | Beispiel 7 | Vergleich zu Beispiel 7 III | IV |
|---|---|---|---|
| Schlagzähigkeit [kJ/mm²] | 53,6 | 24,6 | 27,0 |
| Biegefestigkeit [N/mm²] | 139,2 | 117,8 | 111,9 |
| Randfaserdehnung [%] | 8,37 | 5,61 | 6,11 |
| Zugfestigkeit [N/mm²] | 87,8 | — | — |
| Zugdehnung [%] | 5,9 | — | — |
| E-Modul [N/mm²] | 3060 | 3028 | 2745 |
| Wärmeformbest. nach Martens [°C] | 159 | 160 | 147 |
| Glasübergangstemperatur [°C] | 173 | 169 | 166 |

**Patentansprüche**

**1.** Härtbare Mischungen, geeignet zur Herstellung von Epoxidnetzwerken, gegebenenfalls mit Überstrukturen und hoher Schlagzähigkeit bestehend aus

a) einer Epoxidgruppen enthaltenden Komponente gemäß Formel (I)

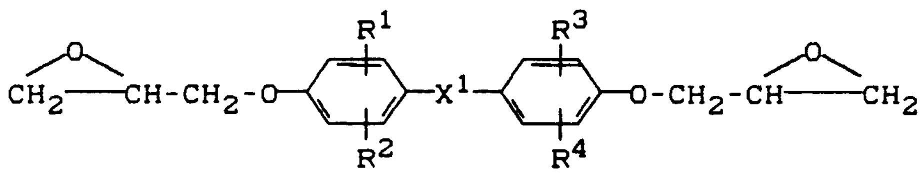

(I)

wobei

$R^1$,$R^2$,$R^3$,$R^4$ unabhängig voneinander Wasserstoff, geradkettiges oder verzweigtes $C_1$ bis $C_{12}$-Alkyl, bei dem die C-Atome 1 bis 3 mal durch Ethersauerstoff unterbrochen sein können, Fluor, Chlor, Brom, Cyano- oder Trifluormethyl,

$X^1$ $-CH_2-CH_2-$, $-CH(CH_3)-CH_2-$, $-CH(CH_3)-$,

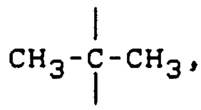

-CH($CH_3$)-, -CO-O-, -O-CO-, -CH = CH-, -CH = C($CH_3$)-, -N = N-, -CH = N-, -O-$CH_2$-, -$CH_2$-O-, -$CH_2$S-, -N = CH-, -CO-S- oder -S-CO- oder aber eine direkte Bindung zwischen den aromatischen Kernen

bedeuten,

b) einer gegen Epoxidgruppen reaktiven Komponente gemäß Formel (II) und

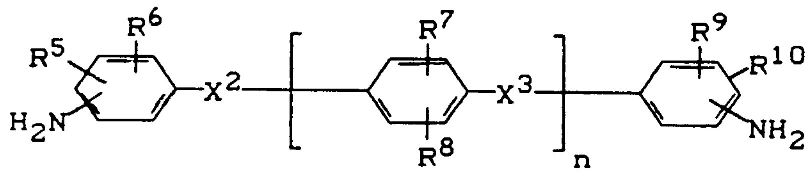

(II)

wobei

$R^5$ bis $R^{10}$ unabhängig voneinander und unabhängig von $R^1$ bis $R^4$ den Bedeutungsumfang von $R^1$ bis $R^4$ besitzen,

$X^2$, $X^3$ unabhängig von $X^1$ und unabhängig voneinander den Bedeutungsumfang von $X^1$ besitzen,

n 0 oder 1 bedeuten und

die beiden Aminogruppen meta- oder paraständig angeordnet sind, wobei mindestens eine der beiden Aminogruppen metaständig zur Gruppe $X^2$ oder $X^3$ angeordnet sein muß und

c) gegebenenfalls weiteren Zusatzstoffen.

**2.** Verfahren zur Herstellung von Epoxidnetzwerken mit Überstrukturen und hoher Schlagzähigkeit, dadurch gekennzeichnet, daß man eine härtbare Mischung gemäß Anspruch 1, bestehend aus

a) einer Epoxidgruppen enthaltenden Komponente gemäß Formel (I)

b) einer gegen Epoxidgruppen reaktiven Komponente gemäß Formel (II) und

c) gegebenenfalls weiteren Zusatzstoffen,

im Temperaturbereich von 60 bis 250 °C, bevorzugt 80 bis 160 °C umsetzt, gegebenenfalls die Aushärtung unterbricht durch Abkühlung unter 60 °C und durch Wiedererwärmung auf eine Temperatur von 60 bis 250 °C zu einem späteren Zeitpunkt gegebenenfalls nach weiterer Formgebung oder Formveränderung, die Aushärtung fortsetzt.

**3.** Verwendung der härtbaren Mischung nach Anspruch 1 als polymere Werkstoff, als Beschichtungs- und Überzugsmittel, als Klebstoffe oder in Kombination mit mineralischen Füllstoffen als Elektroisolier- oder Chipumhüllungsmaterialien.

**4.** Verwendung der härtbaren Mischungen gemäß Anspruch 1 in Kombination mit Glasfasern, C-Fasern oder Aramidfasern zur Herstellung von Hochleistungsverbundwerkstoffen, nach dem one shot oder Zweistufenverfahren.

## Claims

**1.** Curable mixtures suitable for the production of epoxide networks, optionally with superstructures and elevated impact strength consisting of

a) a component of the formula (I) containing epoxide groups

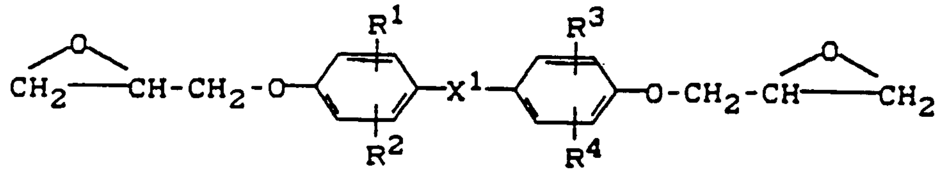

(I)

wherein

$R^1$, $R^2$, $R^3$, $R^4$ mutually independently mean hydrogen, linear or branched $C_1$ to $C_{12}$ alkyl, in which the C atoms may be interrupted 1 to 3 times by ether oxygen, fluorine, chlorine, bromine, cyano or trifluoromethyl,

$X^1$ means $-CH_2-CH_2-$, $-CH(CH_3)-CH_2-$, $-CH(CH_3)-$,

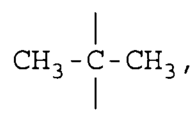

$-CH(CH_3)-$, -CO-O-, -O-CO-, -CH=CH-, $-CH=C(CH_3)-$, -N=N-, -CH=N-, $-O-CH_2-$, $-CH_2-O-$, $-CH_2S-$, -N=CH-, -CO-S- or -S-CO- or alternatively a direct bond between the aromatic nuclei,

b) a component of the formula (II) reactive with epoxide groups and

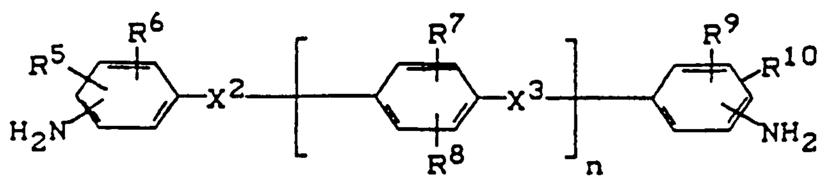

(II)

wherein

$R^5$ to $R^{10}$ mutually independently and independently of $R^1$ to $R^4$ have the range of meaning of $R^1$ to $R^4$,

$X^2$, $X^3$ independently of $X^1$ and mutually independently have the range of meaning of $X^1$,

n means 0 or 1 and

both amino groups are arranged in meta or para position, wherein at least one of the two amino groups must be arranged in meta position relative to the group $X^2$ or $X^3$ and

c) optionally further additives.

**2.** Process for the production of epoxide networks with superstructures and elevated impact strength, characterised in that a curable mixture according to claim 1 consisting of

a) a component of the formula (I) containing epoxide groups

b) a component of the formula (II) reactive with epoxide groups and

c) optionally further additives

is reacted in the temperature range from 60 to 250 °C, preferably from 80 to 160 °C, curing is optionally interrupted by cooling to below 60 °C and curing is continued at a later point in time optionally after further shaping or change of shape by reheating to a temperature of 60 to 250 °C.

**3.** Use of the curable mixture according to claim 1 as a polymeric material, as a coating and covering composition, as adhesives or, in combination with mineral fillers, as electrical insulation or chip

encapsulation materials.

4. Use of the curable mixtures according to claim 1 in combination with glass fibres, C fibres or aramid fibres for the production of high performance composites using the one-shot or two stage process.

## Revendications

1. Mélanges durcissables convenant à la préparation de réseaux époxydiques éventuellement à superstructure et à haute résilience, consistant en

   a) un composant contenant des groupes époxydes, de formule I

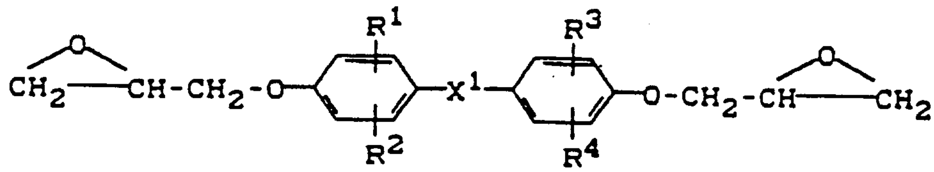

(I)

dans laquelle

| | |
|---|---|
| $R^1$, $R^2$, $R^3$, $R^4$ | représentent chacun, indépendamment les uns des autres, l'hydrogène, un groupe alkyle à chaîne droite ou ramifiée en $C_1$-$C_{12}$ dans lequel la chaîne carbonée peut être interrompue 1 à 3 fois par de l'oxygène d'éther, le fluor, le chlore, le brome, un groupe cyano ou trifluorométhyle, |
| $X^1$ | représente un groupe $-CH_2-CH_2-$, $-CH(CH_3)-CH_2-$, $-CH(CH_3)-$, 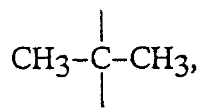 $-CH(CH_3)-$, -CO-O, -O-CO, -CH=CH-, $-CH=C(CH_3)-$, -N=N-, -CH=N, $-O-CH_2-$, $-CH_2-O-$, $-CH_2S-$, -N=CH-, -CO-S- ou -S-CO- ou une liaison directe entre les noyaux aromatiques, |

   b) un composant réactif à l'égard des groupes époxydes, répondant à la formule II

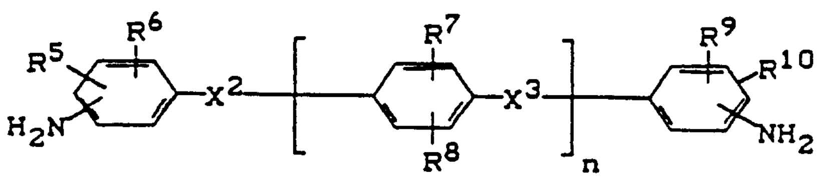

(II)

dans laquelle

| | |
|---|---|
| $R^5$ à $R^{10}$ | ont chacun, indépendamment les uns des autres et indépendamment de $R^1$ à $R^4$, les significations indiquées en référence à $R^1$ à $R^4$, |
| $X^2$, $X^3$ | ont chacun, indépendamment de $X^1$ et indépendamment l'un de l'autre, les significations indiquées en référence à $X^1$, |
| n | est égal à 0 ou 1 et |

les deux groupes amino sont en position méta ou para, l'un au moins des deux groupes amino devant être en position méta par rapport au groupe $X^2$ ou $X^3$, et

   c) le cas échéant d'autres additifs.

**2.** Procédé de préparation de réseaux époxydiques à superstructures et haute résilience, caractérisé en ce que l'on fait réagir dans l'intervalle de température de 60 à 250 °C, de préférence de 80 à 160 °C un mélange durcissable selon revendication 1, consistant en

a) un composant contenant des groupes époxydes, de formule I,

b) un composant réactif à l'égard des groupes époxydes, de formule II, et

c) le cas échéant d'autres additifs,

on interrompt le cas échéant le durcissement par refroidissement à une température inférieure à 60 °C et on complète le durcissement ultérieurement par un réchauffage à une température de 60 à 250 °C, éventuellement après façonnage ou transformation.

**3.** Utilisation des mélanges durcissables selon revendication 1 en tant que matériaux polymères, en tant que produits d'enduction et de revêtement, en tant que colles ou, en combinaison avec des matières de charge minérales, en tant que matériaux isolants de l'électricité ou matériaux d'enrobage de "puces".

**4.** Utilisation des mélanges durcissables selon revendication 1 en combinaison avec des fibres de verte, des fibres de carbone ou des fibres d'Aramides pour la fabrication de matériaux composites à hautes performances par un mode opératoire direct ou à deux stades.